# EUROPEAN PATENT APPLICATION

(11) **EP 3 604 404 A1**
(43) Date of publication of application: **05.02.2020**
(21) Application number: 18775138.3
(22) Date of filing: 26.03.2018
(51) Int. Cl.: C08J 5/22, B01D 69/12, B01D 61/44, B01D 71/06

(54) **BIPOLAR ION EXCHANGE MEMBRANE USING HETEROGENEOUS ION EXCHANGE MEMBRANE AS SUPPORT AND PRODUCTION METHOD THEREFOR**

(30) Priority: 28.03.2017 KR 20170039256
(71) Applicant: Coway Co., Ltd., Gongju-si, Chungcheongnam-do 32508 (KR)
(72) Inventor: LEE, Guk-Won, Seoul 08800 (KR); KANG, Sang-Hyeon, Seoul 08800 (KR); MOON, Sung-Min, Seoul 08800 (KR); LEE, Jun-Young, Seoul 08800 (KR)
(74) Representative: Nederlandsch Octrooibureau
(86) International application number: PCT/KR2018/003538
(87) International publication number: WO 2018/182258

(57) **Abstract**

The present invention relates to a bipolar ion exchange membrane and a production method therefor, and provides a bipolar ion exchange membrane comprising a first polar heterogeneous ion exchange membrane and a second polar homogeneous ion exchange membrane stacked on each other, wherein the first polar heterogeneous ion exchange membrane is formed of an ion exchange resin powder and a binder resin that contain a first polar ion exchange group, the second polar homogeneous ion exchange membrane is formed of a matrix resin containing a second polar ion exchange group, and an interface between the first polar heterogeneous ion exchange membrane and the second polar homogeneous ion exchange membrane is a heterogeneous interface.

## Description

### [Technical Field]

The present disclosure relates to a bipolar ion exchange membrane using a heterogeneous ion exchange membrane as a support and a manufacturing method therefor.

### [Background Art]

An ion exchange membrane, a separation membrane, uses the momentum of mass transfer as electromotive force in separating ionic materials. When cation exchange membrane systems supply current through anodes and cathodes, cations included in electrolyte solutions move to the cathode through ion exchange membranes, and anions cannot penetrate through the ion exchange membrane through the Donnan exclusion of cation exchange membranes. Likewise, anion exchange membrane systems enable anions included in the electrolyte solution to move to the anode through ion exchange membranes, and prevent cations from penetrating the ion exchange membrane by the Donnan exclusion of anion exchange membranes . In such a manner, ionic materials may be separated.

Electrochemical deionization involving use of such ion exchange membrane employs a separation membrane capable of exchanging ions, not filtered purified water, to apply electric force, thereby removing ion, organic materials, heavy metals and other contaminants in water. When current is supplied while cation exchange membranes and anion exchange membranes are bonded to each other so that cation exchange layers are oriented toward cathodes and anion exchange layers are oriented toward anodes, water molecules are decomposed into hydrogen ions (H⁺) and hydroxide ions (OH⁻), which move to the cathode and the anode, respectively.

The deionization includes water-splitting electrodialysis (WSED), in which a cation exchange membrane and an ion exchange membrane are used and to which electrodialysis and a bipolar-type membrane are applied, electrodeionization involving filling ion exchange resins, a capacitive deionization technique using carbon bodies, and the like.

Among the deionization processes, the hydrolysis electrodialysis using a bipolar membrane involves dividing the bipolar membrane into a homogeneous bipolar membrane and a heterogeneous bipolar membrane. The homogeneous bipolar membrane is applied to WSED to use in the production of acids/bases. Due to poor processability and economic feasibility thereof, however, the homogeneous bipolar membrane has not been able to be used in a wide range of applications.

Meanwhile, the heterogeneous bipolar membrane using an ion exchange resin is manufactured as an ion exchange membrane by grinding the ion exchange resin and compounding the same with a polyolefin polymer binder. Due to the polyolefin binder excluding an ion exchange group, the performance may decrease.

In contrast, the heterogeneous bipolar membrane has a widening application range including not only the WSED but also the manufacturing of drinking water, and the like. Further, as the processability and economic feasibility thereof are significantly more excellent than those of the homogeneous bipolar membrane, use of the heterogeneous bipolar membranes are increasing beyond the R&D level.

### [Disclosure]

### [Technical Problem]

The present invention is to provide a heterogeneous bipolar ion exchange membrane not involving a support and a manufacturing method therefor.

### [Technical Solution]

The present disclosure relates to a bipolar ion exchange membrane including a heterogeneous ion exchange membrane. According to an exemplary embodiment, the present disclosure provides a bipolar ion-exchange membrane including a heterogeneous ion-exchange membrane having a first polarity and formed of a binder resin and ion-exchange resin powder including an ion-exchange group having the first polarity, and a homogeneous ion-exchange membrane having a second polarity and formed of a matrix resin including an ion-exchange group having the second polarity, where the heterogeneous ion-exchange membrane and the homogeneous ion-exchange membrane are stacked. The interface of the heterogeneous ion-exchange membrane having the first polarity and the homogeneous ion-exchange membrane having the second polarity are in contact is heterogeneous.

The heterogeneous ion-exchange membrane includes 50 wt% to 80 wt% of the ion-exchange resin powder containing the ion-exchange group having the first polarity.

It is preferable that the heterogeneous ion-exchange membrane be an extruded sheet.

The binder resin may be a polyolefin resin.

The heterogeneous ion-exchange membrane may be a cation-exchange membrane. In this case, the ion-exchange resin powder may include at least one cation exchange group independently selected from the group consisting of a sulfonic acid group (-SO₃H), a carboxyl group (-COOH), a phosphonic group (-PO₃H₂), a phosphinic group (-HPO₂H), an isonic group (AsO₃H₂) and a selenonic group (-SeO₃H).

The homogeneous ion-exchange membrane is an anion exchange membrane formed of a matrix resin having an anion exchange group, and the anion exchange membrane may further contain anion exchange resin powder having the anion exchange group. The anion exchange membrane may contain 10 wt% to 50 wt% of the anion exchange resin powder.

The anion-exchange group may be at least one independently selected from the group consisting of a quaternary ammonium salt (-NH₃), primary to tertiary amines (-NH₂, -NHR and -NR₂), a quaternary phosphonium group (-PR₄) and a tertiary sulfonium group (-SR₃).

The heterogeneous ion-exchange membrane may be an anion-exchange membrane, and the ion-exchange resin powder has at least one anion exchange group independently selected from the group consisting of a quaternary ammonium salt (-NH₃), primary to tertiary amines (-NH₂, -NHR and -NR₂), a quaternary phosphonium group (-PR₄) and a tertiary sulfonium group (-SR₃).

The homogeneous ion-exchange membrane is a cation exchange membrane formed of a matrix resin having a cation exchange group. It is preferable that the cation exchange membrane further contain a cation exchange resin powder having a cation exchange group.

The cation exchange group may be at least one independently selected from the group consisting of a sulfonic acid group (-SO₃H), a carboxyl group (-COOH), a phosphonic group (-PO₃H₂), a phosphinic group (-HPO₂H), an isonic group (AsO₃H₂) and a selenonic group (-SeO₃H).

The matrix resin may be at least one independently selected from the group consisting of polysulfone (PSF), polyether ether ketone (PEEK), styrene-ethylene-butylene -styrene (SEBS) and polyphenylene oxide (PPO), in which the cation exchange group or an anion exchange group is introduced.

The present disclosure also relates to a method for manufacturing the bipolar ion exchange membrane, including casting an ion exchange solution having a second polarity in which a polymer for a matrix resin comprising an ion exchange group having the second polarity is dissolved in a solvent on a surface of an ion exchange membrane having a first polarity on which an ion exchange resin powder having the first polarity and comprising the ion exchange group having the first polarity in a binder resin and drying the same to form an ion exchange membrane having the second polarity.

It is preferable that the ion exchange membrane having the first polarity be an extruded sheet.

It is preferable that the ion-exchange membrane having the first polarity comprise 50 wt% to 80 wt% of the ion exchange resin powder having the first polarity.

The binder resin may be a polyolefin resin.

The ion exchange solution having the second polarity may further contain ion exchange resin powder having the second polarity including an ion exchange group having the second polarity.

The ion exchange resin powder having the second polarity may contain 10 wt% to 50 wt% of the ion exchange membrane having the second polarity.

The solvent may be any one or a mixture of two or more selected from dimethyl formamide, dimethyl acetamide, N-methyl-2- pyrrolidone acetone, chloroform, dichloromethane, trichloroethylene, ethanol, methanol and normal hexane.

The drying may be performed at a temperature of 50°C to 120°C.

### [Advantageous Effects]

As the present disclosure employs a heterogeneous ion exchange membrane, instead of a support used in an existing bipolar membrane, as a support itself, an opposing ion exchange membrane can easily be manufactured by casting a solution.

When manufacturing the ion exchange membrane formed by the casting, ion exchange capacity can be controlled by controlling an amount of ion exchange resin powder added in the ion exchange solution.

In this regard, a bipolar membrane having excellent processability and economic feasibility compared to a homogeneous bipolar membrane and having excellent hydrolytic activity and electrical characteristics compared to the heterogeneous bipolar membrane can be manufactured.

### [Description of Drawings]

FIG. 1 is a cross-sectional view of a conventional bipolar ion exchange membrane.
FIG. 2 is a schematic cross-sectional view of a bipolar ion exchange membrane according to an exemplary embodiment in the present disclosure.
FIG. 3 is a schematic diagram illustrating an example of the method for manufacturing the heterogeneous bipolar ion exchange membrane of FIG. 2 by casting a solution.
FIG. 4 is a diagram illustrating hydrolytic activity of a bipolar ion exchange membrane according to Comparative Example 1 and Example 1.

### [Best Mode for Invention]

The present disclosure is to provide a heterogeneous bipolar ion exchange membrane. The present disclosure relates to a heterogeneous bipolar ion exchange membrane having excellent processability and economic feasibility and exhibiting similar performance compared to a homogeneous bipolar ion exchange membrane and a manufacturing method therefor.

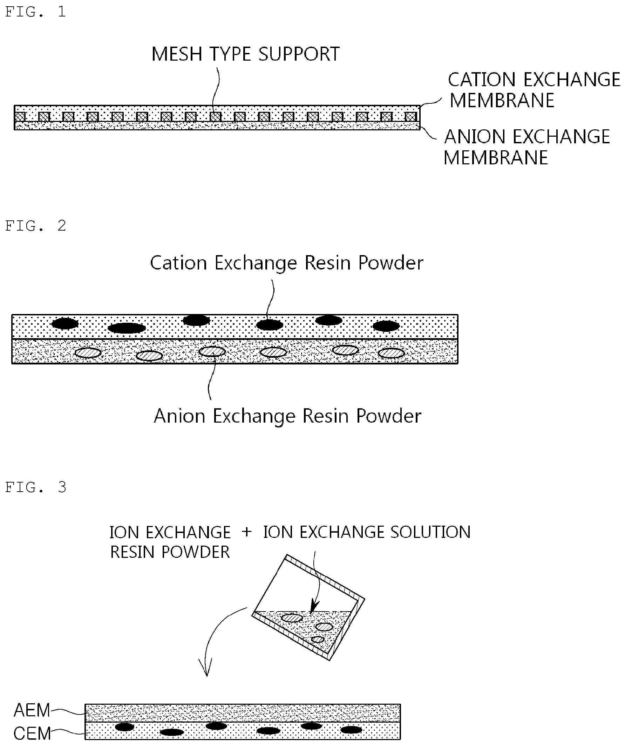

Existing homogeneous bipolar ion exchange membranes employ a support such as a mesh type polyester, as shown in FIG. 1, to enhance mechanical properties and chemical durability. Accordingly, a bipolar ion exchange membrane is manufactured by, for example, impregnating or casting a cation exchange solution in such mesh type support to prepare a monopolar membrane followed by applying an anion exchange solution.

The present disclosure, however, is to provide a method for manufacturing a bipolar membrane by allowing the monopolar membrane support having one polarity and applying an ion exchange solution having the other polarity thereon and a bipolar ion exchange membrane obtained by the method.

According to the present disclosure, a bipolar ion exchange membrane can be easily manufactured by applying the ion exchange solution on a support of the bipolar ion exchange membrane. If necessary, ion exchange resin powder may be added to the ion exchange solution to control ion exchange capacity and electrical characteristics.

The bipolar membrane of the present disclosure, which is hybrid, has a heterogeneous bipolar interface at which a homogeneous ion exchange membrane and a heterogeneous ion exchange membrane are in contact with each other. As such, a surface area of the bipolar membrane interface at which the homogeneous and heterogeneous ion exchange membranes are in contact is significantly larger than that of a bipolar ion exchange membrane having an interface at which two heterogeneous ion exchange membranes are in contact, resulting in excellent hydrolytic activity and electrical characteristics affecting performance.

The bipolar ion exchange membrane of the present disclosure will be described in more detail with reference to the following drawings.

FIG. 2 is a cross-sectional view schematically illustrating a bipolar ion exchange membrane according to an exemplary embodiment in the present disclosure. As shown therein, the bipolar ion exchange membrane according to the present disclosure consists of a homogeneous ion exchange membrane and a heterogeneous ion exchange membrane.

The heterogeneous ion exchange membrane includes anodic or cathodic ion exchange resin powder evenly dispersed in a binder resin, and ion exchange capacity is provided by the ion exchange resin powder.

It is preferable that the heterogeneous ion exchange membrane be provided in a sheet shape. Although not particularly limited, the sheet shape can be formed by mixing the binder resin and the ion exchange resin powder and extruding the same. Such manufacturing of the sheet by the extrusion molding is preferable for simplification of a sheet manufacturing process. Further, the sheet formation by the extrusion can facilitate an easy control of a thickness of the sheet, thereby giving rise to a thinner sheet.

Any binder resin conventionally used in manufacturing of heterogeneous ion exchange membranes can be appropriately used in the present disclosure when preparing the heterogeneous ion exchange membrane, and is thus not particularly limited. For example, a polyolefin resin may be used, and a polyethylene resin may be appropriately used.

The heterogeneous ion exchange membrane may be an anion exchange membrane or a cation exchange membrane. If necessary, an ion exchange membrane having a desired polarity can be obtained by adding ion exchange resin powder having an anion exchange group or a cation exchange group. It is preferable that 50 wt% to 80 wt% of the ion exchange resin powder be contained based on a weight of the ion exchange membrane. Said range secures sufficient ion exchange capacity. When the ion exchange resin powder is contained in an amount less than 50 wt%, the ion exchange capacity decreases, whereas an amount thereof more than 80 wt% may decrease processability.

The ion exchange resin powder is not particularly limited, but may be ion exchange resin powder having a cation exchange group such as a sulfonic acid group (-SO₃H), a carboxyl group (-COOH), a phosphonic group (-PO₃H₂), a phosphinic group (-HPO₂H), an isonic group (AsO₃H₂), a selenonic group (-SeO₃H), and the like. Additionally, the anion exchange resin powder is not limited but may be anion exchange resin powder having an anion exchange group such as a quaternary ammonium salt (-NH₃), primary to tertiary amines (-NH₂, -NHR and -NR₂), a quaternary phosphonium group (-PR₄), a tertiary sulfonium group (-SR₃), and the like.

Any resin having such cation exchange group or an anion exchange group can be appropriately used as the ion exchange resin powder of the present disclosure. Although not particularly limited, those having a copolymer structure of styrene and divinylbenzene, for example, may be used.

The ion exchange resin powder can be used when an average diameter thereof is 10 µm to 200 µm. The average diameter less than 10 µm increases manufacturing costs of the powder and makes it difficult to uniformly disperse the powder in a solution when manufacturing a membrane, whereas that exceeding 200 µm significantly decreases a specific surface area of the ion exchange and increases an amount of the ion exchange solution being used as a binder. Accordingly, it is preferable to use powder having an appropriate powder size.

Thus-obtained extruded sheet is an ion exchange membrane having any polarity and is used as a support to form a homogeneous ion exchange membrane having the other polarity on a surface thereof. A conventional homogeneous ion exchange membrane is formed by a polymer solution having an ion exchange group, and a support is required to apply the solution. In this regard, an additional support has been conventionally used. According to the present disclosure, however, as the ion exchange membrane having a first polarity functions as a support itself, there is no need to use a mesh type support.

An ion exchange membrane having a second polarity is formed on one surface of thus-obtained extruded sheet of the ion exchange membrane having the first polarity containing the ion exchange resin powder having the first polarity. The ion exchange membrane having the second polarity in the present disclosure is a homogeneous ion exchange membrane. The homogeneous ion exchange membrane may be formed by applying an ion exchange solution for the formation of the second ion exchange membrane on a surface of the ion exchange membrane having a first polarity.

The ion exchange solution may be formed by applying a liquid ion exchange resin having the second ion exchange group on a surface of the ion exchange membrane having the first polarity, and is not particularly limited as long as the ion exchange solution contains an ion exchange group having a polarity different from that of the ion exchange membrane having the first polarity. As for the ion exchange resin, a polymer having a cation exchange group such as a sulfonic acid group (-SO₃H), a carboxyl group (-COOH), a phosphonic group (-PO₃H₂), a phosphinic group (-HPO₂H), an isonic group (AsO₃H₂), a selenonic group (-SeO₃H), and the like, may be used as the cation exchange resin, and a polymer having an anion-exchange group such as a quaternary ammonium salt (-NH₃), primary to tertiary amines (-NH₂, -NHR and -NR₂), a quaternary phosphonium group (-PR₄)m a tertiary sulfonium group (-SR₃), and the like, may be used as the anion exchange resin.

The polymer having such cation or anion exchange group is not particularly limited as long as the polymer is conventionally used in the manufacturing of the bipolar ion exchange membrane, and may be, for example, PSF, PEEK, SEBS and PPO. The polymer may be obtained by polymerizing a monomer.

A polymer having rubbery properties such as the SEBS may minimize deterioration of mechanical properties thereof by introducing an appropriate ion exchange group. Performance may be improved by adding the ion exchange resin powder as the ion exchange solution. Furthermore, the polymer is preferable as the polymer can contribute to connection of the ion exchange membranes having two different polarities. In particular, the SEBS includes a rubbery butylenes group, and can be appropriately used in the manufacture of the bipolar ion exchange membrane for spiral winding electrical deionization, and thus is preferable.

The bipolar ion exchange membrane of the present disclosure may be formed by dissolving an ion exchange resin having the second polarity having an ion exchange group in a solvent to prepare an ion exchange resin solution and applying the solution on a surface of an ion exchange membrane having the first polarity and drying.

An appropriate solvent may be selected to use according to a type of the polymer introduced in the ion exchange group. Although not particularly limited, one or a mixture of two or more selected from dimethyl formamide, dimethyl acetamide, N-methyl-2- pyrrolidone acetone, chloroform, dichloromethane, trichloroethylene, ethanol, methanol and normal hexane may be used.

The ion exchange membrane having the second polarity can be formed on a surface of the ion exchange membrane having the first polarity by any method. Although not particularly limited, for example, casting may be employed therefor.

The ion exchange membrane having the second polarity may be formed on a surface of the ion exchange membrane having the first polarity by applying the ion exchange solution having the second polarity and evaporating an organic solvent by the drying. By drying the ion exchange membrane-forming composition having the second polarity, the ion exchange resin functions as a matrix to form an ion exchange membrane. In this regard, a bipolar ion exchange membrane, in which the heterogeneous ion exchange membrane having the first polarity and the homogeneous ion exchange membrane having the second polarity oppose each other, is obtained.

A second ion exchange solution forming the ion exchange membrane having the second polarity may further include ion exchange resin powder having a second polarity. Use of the second ion exchange resin powder, as the above, enables control of ion exchange capacity.

10 wt% to 50 wt% of the second ion exchange resin powder may be contained, based on a weight of the second ion exchange resin consisting the ion exchange membrane having the second polarity. An added amount less than 10 wt% is not an issue but leads to insignificantly increased ion exchange capacity caused by the addition. An amount greater than 50 wt% decreases processability due to casting. More preferably, the ion exchange resin powder having the first polarity may be contained in an amount of 10 wt% to 50 wt%, for example, 10 wt% to 50 wt%,10 wt% to 40 wt%, or the like.

The second ion exchange resin powder and the ion exchange resin powder used in the formation of the first ion exchange membrane are identical except that they have different polarities. A detailed description thereof will be omitted.

In the present disclosure, a bipolar ion exchange membrane, in which a homogeneous ion exchange membrane and a heterogeneous ion exchange membrane are stacked, is obtained, where the heterogeneous ion exchange membrane is a heterogeneous ion exchange membrane in which an ion exchange resin powder having an ion exchange group having the first polarity is dispersed in a binder resin, and the homogeneous ion exchange membrane is a homogeneous exchange membrane having a second polarity and formed of a matrix resin having an ion exchange group having the second polarity.

The interface of the bipolar ion exchange membrane obtained by the present disclosure has a heterogeneous interface as the homogeneous ion exchange membrane and the heterogeneous ion exchange are stacked, and has not only excellent hydrolytic activity compared to a conventional bipolar ion exchange membrane having a heterogeneous interface but also provides similar hydrolytic activity compared to a homogeneous interfaced-bipolar ion exchange membrane. Further, if necessary, ion exchange capacity may be improved by adding additional ion exchange resin powder to the homogeneous second ion exchange membrane, thereby enabling the hydrolytic activity and electrical characteristics thereof to be controlled.

### [Mode for Invention]

### Examples

Hereinafter, the present disclosure will be described in more detail according to the following exemplary embodiments, and should not be construed as limiting the present disclosure.

### Comparative Example 1

A heterogeneous bipolar membrane (a thickness of 400 µm), prepared by compounding an ion exchange resin having an ion exchange group and a binder excluding an ion exchange group, having a heterogeneous interface mounted in an ion exchange module manufactured by Pionetics and commercially available was measured and compared in terms of hydrolysis efficiency.

The heterogeneous bipolar membrane has a heterogeneous interface. Not only entire cation and anion exchange membranes but also portions of an interface including and excluding the ion exchange group are randomly positioned, thereby giving rise to not homogeneous interface.

### Example 1

A polyethylene resin and an anion exchange resin powder are mixed at a ratio of 4 : 6, and extruded to manufacture a sheet having a thickness of 400 µm.

A solution in which 40 wt$ of the ion exchange resin is mixed with sulfonated polyphenylene oxide (SPPO) having ion exchange capacity of 0.7 meq/g to 1.0 meq/g was casted on the sheet to manufacture a bipolar membrane (CW-1).

As the cation exchange resin powder, a copolymer of styrene and divinylbenzene having a sulfonyl group (Daw Chemicals Co., Ltd., AMERKITE™ IR 12_Na, average particle size of 20 µm) was used.

The ion exchange capacity increased as an amount of the ion exchange resin increased; when 40 wt% was included, the capacity doubled to 2.0 meq/g. The ion exchange capacity increases as the ion exchange resin is added to the ion exchange solution. However, the hydrolytic performance is generated on an interface and thus is not affected by the added ion exchange resin.

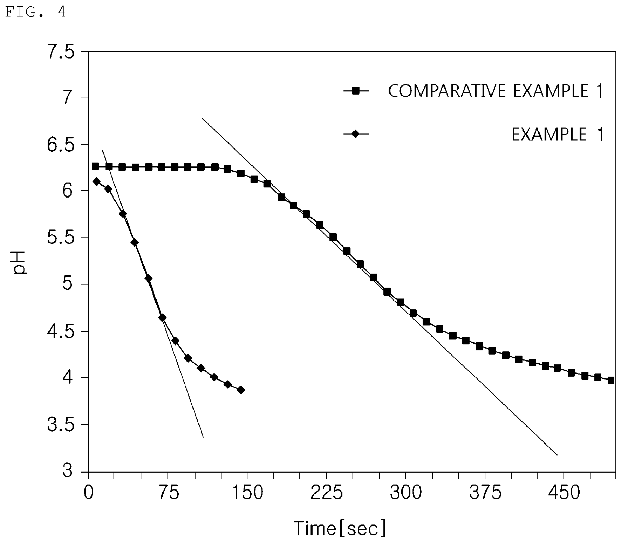

The hydrolytic performance of the bipolar membranes of Comparative Example 1 and Example 1 are shown in FIG. 4. According to FIG. 4, the hydrolytic performance can be determined based on difference in a slope after pH begins to change. Compared to the heterogeneous bipolar membrane of Comparative Example 1, the hybrid bipolar membrane (CW-1) prepared in Example 1 showed more excellent performance as the slope increased.

## Claims

1. A bipolar ion-exchange membrane, comprising:
a heterogeneous ion-exchange membrane having a first polarity and formed of a binder resin and ion-exchange resin powder comprising an ion-exchange group having the first polarity, and a homogeneous ion-exchange membrane having a second polarity and formed of a matrix resin comprising an ion-exchange group having the second polarity, the heterogeneous ion-exchange membrane and the homogeneous ion-exchange membrane being stacked,
wherein an interface at which the heterogeneous ion-exchange membrane having the first polarity and the homogeneous ion-exchange membrane having the second polarity are in contact is heterogeneous.

2. The bipolar ion-exchange membrane of claim 1, wherein the heterogeneous ion-exchange membrane comprises 50 wt% to 80 wt% of the ion-exchange resin powder comprising the ion-exchange group having the first polarity.

3. The bipolar ion-exchange membrane of claim 1, wherein the heterogeneous ion-exchange membrane is an extruded sheet.

4. The bipolar ion-exchange membrane of claim 1, wherein the binder resin is a polyolefin resin.

5. The bipolar ion-exchange membrane of claim 1, wherein the heterogeneous ion-exchange membrane is a cation-exchange membrane, and the ion-exchange resin powder comprises at least one cation exchange group independently selected from the group consisting of a sulfonic acid group (-SO₃H), a carboxyl group (-COOH), a phosphonic group (-PO₃H₂), a phosphinic group (-HPO₂H), an isonic group (AsO₃H₂) and a selenonic group (-SeO₃H).

6. The bipolar ion-exchange membrane of claim 5, wherein the homogeneous ion-exchange membrane is an anion exchange membrane formed of a matrix resin having an anion exchange group, wherein the anion exchange membrane further comprises anion exchange resin powder having the anion exchange group.

7. The bipolar ion-exchange membrane of claim 6, wherein the anion exchange membrane comprises 10 wt% to 50 wt% of the anion exchange resin powder.

8. The bipolar ion-exchange membrane of claim 6 or claim 7, wherein the anion-exchange group is at least one independently selected from the group consisting of a quaternary ammonium salt (-NH₃), primary to tertiary amines (-NH₂, -NHR and -NR₂), a quaternary phosphonium group (-PR₄) and a tertiary sulfonium group (-SR₃).

9. The bipolar ion-exchange membrane of claim 1, wherein the heterogeneous ion-exchange membrane is an anion-exchange membrane, and the ion-exchange resin powder has at least one anion exchange group independently selected from the group consisting of a quaternary ammonium salt (-NH₃), primary to tertiary amines (-NH₂, -NHR and -NR₂), a quaternary phosphonium group (-PR₄) and a tertiary sulfonium group (-SR₃).

10. The bipolar ion-exchange membrane of claim 9, wherein the homogeneous ion-exchange membrane is a cation exchange membrane formed of a matrix resin having a cation exchange group, wherein the cation exchange membrane further comprises a cation exchange resin powder having a cation exchange group.

11. The bipolar ion-exchange membrane of claim 10, wherein the cation-exchange membrane comprises 10 wt% to 50 wt% of the cation exchange resin powder.

12. The bipolar ion-exchange membrane of claim 10 or claim 11, wherein the cation exchange group is at least one independently selected from the group consisting of a sulfonic acid group (-SO₃H), a carboxyl group (-COOH), a phosphonic group (-PO₃H₂), a phosphinic group (-HPO₂H), an isonic group (AsO₃H₂) and a selenonic group (-SeO₃H).

13. The bipolar ion-exchange membrane of claim 1, the matrix resin is selected from the group consisting of polysulfone, polyether ether ketone, styrene-ethylene-butylene-styrene and polyphenylene oxide.

14. A method for manufacturing a bipolar ion exchange membrane, comprising:
casting an ion exchange solution having a second polarity in which a polymer for a matrix resin comprising an ion exchange group having the second polarity is dissolved in a solvent on a surface of an ion exchange membrane having a first polarity on which an ion exchange resin powder having the first polarity and comprising the ion exchange group having the first polarity in a binder resin and drying the same to form an ion exchange membrane having the second polarity.

15. The method of claim 14, wherein the ion exchange membrane having the first polarity is an extruded sheet.

16. The method of claim 14, wherein the ion-exchange membrane having the first polarity comprises 50 wt% to 80 wt% of the ion exchange resin powder having the first polarity.

17. The method of claim 14, wherein the binder resin is a polyolefin resin.

18. The method of claim 14, wherein the ion exchange solution having the second polarity further comprises ion exchange resin powder having the second polarity comprising an ion exchange group having the second polarity.

19. The method of claim 18, wherein the ion exchange resin powder having the second polarity comprises 10 wt% to 50 wt% of the ion exchange membrane having the second polarity.

20. The method of claim 14, wherein the solvent is any one or a mixture of two or more selected from dimethyl formamide, dimethyl acetamide, N-methyl-2- pyrrolidone acetone, chloroform, dichloromethane, trichloroethylene, ethanol, methanol and normal hexane.

21. The method of claim 14, wherein the drying is performed at a temperature of 50°C to 120°C.
